# EUROPÄISCHE PATENTSCHRIFT

(11) **EP 0 497 171 B1**
(45) Veröffentlichungstag und Bekanntmachung des Hinweises auf die Patenterteilung: **02.04.1997**
(21) Anmeldenummer: 92100811.6
(22) Anmeldetag: 20.01.1992
(51) Int. Cl.: C08G 77/60, C04B 35/00, C04B 35/56, C08G 79/00

(54) **Heteroatome enthaltende Polycarbosilane**
Polycarbosilanes containing heteroatoms
Polycarbosilanes contenant hétéroatomes

(30) Priorität: 26.01.1991 DE 4102315
(43) Veröffentlichungstag der Anmeldung: 05.08.1992
(73) Patentinhaber: Solvay Deutschland GmbH, D-30173 Hannover (DE)
(72) Erfinder: Sartori, Peter, W-4134 Rheinberg 4 (DE); Habel, Wolfgang, W-4000 Düsseldorf (DE); Nover, Christoph, W-4390 Gladbeck (DE); Van Aefferden, Boudouin, W-4100 Duisburg 1 (DE); Mayer, Lutz, W-4100 Duisburg 1 (DE); Adrian, Thomas, W-4100 Duisburg 1 (DE)
(74) Vertreter: Lauer, Dieter, Dr.

(56) Entgegenhaltungen:
- EP-A- 0 375 994
- US-A- 4 762 895
- US-A- 4 987 201

## Beschreibung

Die Erfindung bezieht sich auf ein Verfahren zur Herstellung von Heteroelement enthaltenden Polycarbosilane.

Es ist im Stand der Technik bekannt, Polycarbosilane und Polycarbosilanderivate unter anderem als Polymervorstufen zur Herstellung von keramischen Fasern nach der sogenannten Polymervorstufen-Methode (Precursor-Methode) zu verwenden. Hierzu werden zunächst die Polycarbosilanpolymere hergestellt. Solche Polycarbosilane sind Polymere mit einer Gerüststruktur aus den Elementen Kohlenstoff und Silicium, wobei die Polymere aus einem Gerüst mit einer Hauptkette aus (-Si-CH₂-) zusammengesetzt sind, in der an jedem Si-Atom zwei Seitenkettengruppen gebunden sind. Die Polycarbosilane werden anschließend z.B. zu Polymerfasern gesponnen, die durch Pyrolyseverfahren in einer nicht oxidierenden Atmosphäre in eine keramische SiC-Faser überführt werden können. Um als Vorstufe für die pyrolytische Herstellung einer keramischen Faser dienen zu können, müssen sich die Polycarbosilane mit hohen Ausbeuten und unter Erhalt der ursprünglichen Polymer-Morphologie, d.h. unter Erhalt einer aus dem Polymer vorgebildeten Faserform, in die keramische Faser überführen lassen. Häufig werden jedoch bei der Faserherstellung statt der gewünschten SiC-Bildung, je nach der Art des eingesetzten Polycarbosilans, in mehr oder weniger großem Umfang auch Schmelzvorgänge, Zersetzungsreaktionen unter Bildung von großen, flüchtigen Molekülen, Schrumpfungsprozesse und Gewichtsverlust beobachtet; die sich bildenden SiC-Produkte werden durch derartige Nebenreaktionen in ihren Eigenschaften negativ beeinflußt und erweisen sich daher oftmals als unbrauchbar.

Um den vorstehenden Nachteilen zu begegnen werden im Stand der Technik einerseits Heteroatomverbindungen wie z.B. Polyborodiphenylsiloxan (PBDPSO) und Polymetallosiloxane, d.h. Heteroelementverbindungen, die Metalloxan-Einheiten -Mt-O- (Mt = Metall, z.B. Ti oder Zr) und Siloxan-Einheiten -Si-O- aufweisen, den Polycarbosilanen als Sinterhilfsmittel bei der Pyrolyse zur Faserherstellung zugesetzt. Andererseits werden auch Heteroelemente wie z.B. B, Ti, Zr, Cr, Mo und andere als Metalloxan-Einheiten -Mt-O- in das Gerüst von Polycarbosilanen eingebaut; diese Polymetallocarbosilane des Standes der Technik leiten sich somit von Polycarbosilanen ab, deren Hauptkettengerüst im wesentlichen aus Struktureinheiten -Si-CH₂- und Metalloxan-Einheiten -Mt-O- gebildet ist. Polymetallocarbosilane wie z.B. Polytitanocarbosilan, werden Polycarbosilanen ebenfalls als Binder- und Sinterhilfsmittel für die pyrolytische Weiterverarbeitung zugesetzt.

In den Polymetallocarbosilanen und Polymetallocarbosiloxanen ist das Heteroelement ebenso wie im Polyborodiphenylsiloxan immer über Sauerstoffatome an die Siliciumatome des Polycarbosilans gebunden. Dementsprechend lassen sich aus diesen Heteroelement enthaltenden Polycarbosilanderivaten nur keramische Fasern herstellen, die zwangsläufig ebenfalls immer Sauerstoff enthalten. Zur Verbesserung der Eigenschaften der keramischen Fasern ist es jedoch oftmals erwünscht, den Anteil an Sauerstoff in der keramischen Faser so niedrig wie möglich einzustellen. Es besteht daher ein Bedarf an Heteroelement enthaltenden Polycarbosilanen, in denen kein Sauerstoff enthalten ist und das Heteroelement somit ohne Sauerstoffbrücken in das Polycarbosilangerüst eingebaut ist.

Aus US 4 987 201 sind borhaltige polymere Si-Verbindungen bekannt, die durch Umsetzung von Vinylsilanen mit Boranen hergestellt werden, die jedoch nur über das Heteroelement vernetzbar sind.

Die EP 375 994 beschreibt neue Polycarbosilane, die direkt aus den entsprechenden Monomeren herstellbar sind. Die Möglichkeiten zum Einbau von Heteroelementen werden jedoch nicht aufgezeigt.

Aus der US 4 762 895 ist die Herstellung von sauerstoffarmen metallhaltigen Polysilanen bekannt, wobei die Anwendung eines Umlagerungskatalysators zwingend notwendig ist.

Es bestand somit die Aufgabe, ein Verfahren zur Herstellung von Heteroelement enthaltenden Polycarbosilanen bereitzustellen, das die Nachteile des Standes der Technik vermeidet, d.h. die hergestellten Polycarbosilan sind sauerstofffrei und das Heteroelement ist in der Weise in das Polycarbosilangerüst eingebaut daß Siliciumatome durch das Heteroelement substituiert sind.

Zur Lösung dieser Aufgabe schlägt die Erfindung ein Verfahren zur nichtkatalysierten und nichtpyrolytischen Herstellung von Heteroelemente enthaltenden Polycarbosilanen auf Basis von Struktureinheiten der allgemeinen Formeln I und II vor, 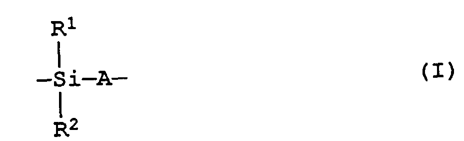 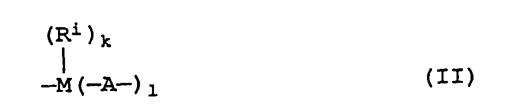 worin
- R¹: für Wasserstoff, gegebenenfalls durch inerte Reste substituierte und/oder verzweigte Alkyl-, Cycloalkyl-, Arylalkyl-Cycloalkenyl- oder Aryl-Reste steht, wobei R¹ in verschiedenen Einheiten ein und desselben Polycarbosilans auch unterschiedliche Bedeutung besitzen kann,
- R²: für gegebenenfalls durch inerte Reste substituierte und/oder verzweigte Alkyl-, Cycloalkyl-, Cycloalkenyl-Arylalkyl- oder Aryl-Reste steht, wobei R² in verschiedenen Einheiten ein und desselben Polycarbosilans auch unterschiedliche Bedeutung besitzen kann,
A für einen geradkettigen oder verzweigten Alkylen-Rest oder einen Arylen-Rest steht, wobei A in verschiedenen Einheiten ein und desselben Polycarbosilans auch unterschiedliche Bedeutung besitzen kann,
- M: für ein Heteroelement mit einer formalen Wertigkeit m = 2,3,4 oder 5 aus B, Al, Ga, Ge, Sn, Pb, P, As, Sb, Se, Te, Ti, Zr, Hf, V, Nb, Ta, Cr, Mo, W, Mn, Ni, Pd und Pt steht,
- (Rⁱ)ₖ: für eine Anzahl k = 0,1,2 oder 3 gleicher oder unterschiedlicher Reste Rⁱ aus der Gruppe Alkyl, Phenyl, Cyclopentadienyl und Cyclooctadienyl steht und
- 1: mit dem Wert 1, 2, 3 oder 4 für die Anzahl der in der Struktureinheit der Formel II an das Heteroelement M gebundenen Reste A mit der obigen Bedeutung steht, wobei die Maßgabe gilt, daß m = k+l+1 ist.

Die Erfindung betrifft ein Verfahren zur Herstellung von Heteroelement enthaltenden Polycarbosilane auf Basis von Struktureinheiten der allgemeinen Formeln I und II durch Cokondensation einer Halogenheteroatom-Verbindung mit wenigstens einem Dihalogensilan und wenigstens einem Dihalogenkohlenwasserstoff in Gegenwart von Alkalimetall oder Magnesium, gewünschtenfalls unter Zusatz von Vernetzungs- und/oder Kettenabbruchreagentien,
wobei die Dihalogensilane ausgewählt sind aus Verbindungen der Formel V 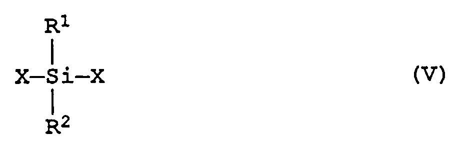 worin
- R¹ und R²: die obige Bedeutung haben und
- X: für die Halogene, Chlor oder Brom steht,
wobei die Dihalogenkohlenwasserstoffe ausgewählt sind aus Verbindungen der Formel VI

Y-A-Y (VI)

worin
- A: die obige Bedeutung hat und
- Y: für die Halogene Chlor, Brom oder Jod, vorzugsweise für Chlor oder Brom steht,
und wobei die Halogenheteroatom-Verbindung ausgewählt ist aus Verbindungen der Formel VII 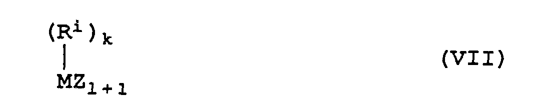 worin
- M, (Rⁱ)ₖ und ℓ: die oben genannten Bedeutungen haben und
- Z: für die Halogene Chlor, Brom, Jod, vorzugsweise Chlor oder Brom, steht.

Die erfindungsgemäß hergestellten Polycarbosilane enthalten somit außer den Polycarbosilan-Struktureinheiten der Formel I auch Heteroelement-Struktureinheiten der Formel II. Der Begriff "Heteroelement" im Sinne der Erfindung umfaßt hierbei die oben aufgeführten Elemente M, die anstelle von Siliciumatomen in das Heteroelement-Polycarbosilan eingebaut sein können. Diese Heteroelemente sind daher im Gerüst des Heteroelement-Polycarbosilans ebenso wie die Siliciumatome über Alkylen-Reste oder Arylen-Reste A mit den übrigen Einheiten des Polycarbosilans verbunden. Die Polycarbosilane sind sauerstofffrei und unterscheiden sich damit in dieser Hinsicht besonders vorteilhaft von den sauerstoffhaltigen Polycarbosilanverbindungen des Standes der Technik wie z.B. den Polymetallocarbosilanen mit den Metalloxan-Einheiten -Mt-O-.

Einige stellvertretende Beispiele für die in den Heteroelement-Struktureinheiten der Formel II enthaltenen M(Rⁱ)ₖ-Gruppen, die in den Heteroelement-Polycarbosilanen vorliegen können, sind für das Heteroelement Bor die Ethylbor- (C₂H₅B-) oder Phenylbor-Gruppe (PhB-; Ph = C₆H₅ = Phenyl); für das Heteroelement Aluminium die Methylaluminium- (CH₃Al-) oder Ethylaluminium-Gruppe (C₂H₅Al-); für das Heteroelement Gallium die Methylgallium- (CH₃Ga-) oder Ethylgallium-Gruppe (C₂H₅Ga-); für das Heteroelement Germanium die Dimethylgerman- ((CH₃)₂Ge-) oder Methylgerman- Gruppe (CH₃Ge-); für das Heteroelement Zinn die Dimethylzinn- ((CH₃)₂Sn-), Methylphenylzinn- (CH₃PhSn-), Diphenylzinn- (Ph₂Sn-) oder die Dicyclopentadienylzinn-Gruppe (Cp₂Sn-; Cp = C₅H₅ = Cyclopentadienyl); für das Heteroelement Blei die Dimethylblei- ((CH₃)₂Pb-), Diethylblei- ((C₂H₅)₂Pb-) oder Diphenylblei-Gruppe (Ph₂Pb-); für das Heteroelement Phosphor die Phenylphosphor-Gruppe (PhP-); für das Heteroelement Arsen die Trimethylarsen- ((CH₃)₃As-), Dimethylarsen- ((CH₃)₂As-) oder Phenylarsen-Gruppe (PhAs-); für das Heteroelement Antimon die Trimethylantimon- ((CH₃)₃Sb-), Methylantimon- (CH₃Sb-), Triphenylantimon- (Ph₃Sb-) oder Diphenylantimon-Gruppe (Ph₂Sb-); Dicyclopentadienyl-Metall-Gruppen (Cp₂M-) der Heteroelemente Zinn, Titan, Zirkonium, Hafnium, Vanadium, Niob, Tantal, Chrom, Molybdän und Wolfram; sowie Cyclopentadienyl-Metall-Gruppen (CpM-) wie z.B. die π-Cyclopentadienyltitan- (CpTi-), π-Cyclopentadienylniob- (CpNb-), π-Cyclopentadienyltantal- (CpTa-) oder die π-Cyclopentadienylnickel-Gruppe (CpNi-); Niobgruppen wie die Trimethylniob-Gruppe ((CH₃)₃Nb-); für die Heteroelemente Palladium und Platin die Cyclooctadienyl-Metall-Gruppen -Pd(η⁴-C₈H₁₂) bzw. -Pt(η⁴-C₈H₁₂). Statt der in den aufgeführten Beispielen für die M(Rⁱ)ₖ-Gruppen genannten Reste Rⁱ können gewünschtenfalls auch andere analoge organische Reste in diesen Gruppen vorliegen. Ein Beispiel für einen besonderen analogen organischen Rest Rⁱ ist die Trimethylsilylmethyl-Gruppe (CH₃)₃Si-CH₂-. Es können ggf. in Heteroelement-Struktureinheiten der Formel II auch solche Metallgruppen vorliegen, die keine organische Reste Rⁱ tragen, d.h. in diesem Fall ist k = 0. Als Beispiele , bei denen auch solche M-Gruppen ohne Reste Rⁱ vorliegen können, sind insbesondere die M-Gruppen der Heteroelemente wie z.B. Bor, Selen, Tellur, Chrom und Mangan zu nennen.

In einer zweckmäßigen Ausgestaltung der erfindungsgemäß hergestellten Heteroelement-Polycarbosilane liegen in den Heteroelement-Struktureinheiten der Formel II solche M(Rⁱ)ₖ-Gruppen vor, in denen der Rest (Rⁱ)ₖ für eine Anzahl k = 1, 2 oder 3 gleicher Reste Rⁱ aus der Gruppe niederes Alkyl, Phenyl oder Cyclopentadienyl steht. Niederes Alkyl ist hierbei ein C1- bis C4-Alkylrest, insbesondere aber Methyl oder Ethyl.

In einer weiteren zweckmäßigen Ausgestaltung der erfindungsgemäß hergestellten Heteroelement-Polycarbosilane zeichnen sich diese dadurch aus, daß das Heteroelement ausgewählt ist aus B mit der Wertigkeit m = 3 und Ti, Zr, Hf mit jeweils der Wertigkeit m = 4. Die Reste Rⁱ stehen dann in einer bevorzugten Ausgestaltung dieser Heteroelement-Polycarbosilane im Falle des Heteroelementes Bor mit der Wertigkeit m = 3 für Phenyl und im Falle der Heteroelemente Titan, Zirkonium oder Hafnium mit der Wertigkeit m = 4 für Cyclopentadienyl. Der Index 1 steht in bevorzugten Heteroelement-Polycarbosilanen insbesondere für den Wert 1. Beispiele für solche bevorzugten M(Rⁱ)ₖ-Gruppen in den Heteroelement-Struktureinheiten der Formel II sind insbesondere die Phenylborgruppe und die Dicyclopentadienyltitan-, Dicyclopentadienylzirkon- und Dicyclopentadienylhafniumgruppe.

In einer Ausgestaltung der Erfindung bestehen die Heteroelement enthaltenden Polycarbosilane aus einer Anzahl verschiedener, nebeneinander vorliegender Struktureinheiten der allgemeinen Formeln I und II. Sowohl die Heteroelement-Struktureinheiten der Formel II als auch die Carbosilan-Struktureinheiten der Formel I können sich in den Resten A unterscheiden. Zusätzlich können sich die Carbosilan-Struktureinheiten der Formel I auch in den Substituenten R¹ und/oder R² unterscheiden. Gewöhnlich stellen die das Heteroelement enthaltende Polycarbosilan aufbauenden Struktureinheiten der allgemeinen Formel I und II Kombinationen von nicht mehr als maximal drei unterschiedlich substituierten Si-Einheiten und von nicht mehr als maximal drei unterschiedlichen A-Einheiten mit einer Heteroelement-Struktureinheit dar.

In einer zweckmäßigen Variante besitzt A in allen Struktureinheiten der allgemeinen Formeln I und II des Heteroelement enthaltenden Polycarbosilan nur eine einzige Bedeutung; es liegen dann z.B. solche Polycarbosilane vor, in denen die Struktureinheiten der allgemeinen Formeln I und II aus Kombinationen von nicht mehr als drei unterschiedlich substituierten Si-Einheiten und einer M-Einheit mit lediglich einer A-Einheit aufgebaut sind.

In einer weiteren zweckmäßigen Variante der Erfindung besitzen in den Si-Einheiten die Substituenten R¹ und R² in allen Struktureinheiten der allgemeinen Formel I des Polycarbosilans jeweils für sich nur eine einzige Bedeutung. Es liegen dann z.B. solche Heteroelement enthaltende Polycarbosilane aus Struktureinheiten der allgemeinen Formeln I und II vor, in denen alle R¹R²Si-Einheiten identisch sind, d.h. es liegen solche Polycarbosilane vor, in denen nur ein einziger Typ einer R¹R²Si-Einheit neben der (Rⁱ)ₖM-Heteroelementeinheit vorliegt.

In einer bevorzugten Variante liegt in den Heteroelement enthaltenden Polycarbosilanen jeweils nur ein einziger Typ der Struktureinheiten der allgemeinen Formeln I und II vor. Die R¹R²Si-Einheiten, die (Rⁱ)ₖM-Heteroelementeinheiten und die A-Einheiten sind dann in allen sich jeweils entsprechenden Struktureinheiten des Polycarbosilans auf Basis der allgemeinen Formeln I und II identisch.

In den erfindungsgemäß hergestellten Polycarbosilanen kann in den Si-Struktureinheiten der Formel I der Rest R¹ in einer Variante der Erfindung für Wasserstoff stehen. In einer anderen Variante der Polycarbosilane können die Reste R¹ und/oder R² in den Si-Struktureinheiten der Formel I für Alkyl stehen; Alkyl besitzt hierbei die Bedeutung eines gesättigten oder ungesättigten geradkettigen oder verzweigten Alkylrestes, der gegebenenfalls durch inerte Reste weiter substituiert sein kann. Beispiele für Alkyl sind Methyl, Ethyl, Propyl, Butyl, Pentyl, Hexyl, Octyl, Dodecyl, Hexydecyl, Isopropyl, Isobutyl, Tertiärbutyl oder Allyl. Die Reste R¹ und/oder R² können in den Si-Struktureinheiten der Formel I auch für Cycloalkyl stehen; Cycloalkyl steht dann mit der Bedeutung eines gesättigten oder ungesättigten, gegebenenfalls durch inerte Reste weiter substituierten Cycloalkylrestes. Beispiele für Cycloalkyl sind Cyclopentyl, Cyclohexyl, Cyclopentenyl oder Cyclohexenyl. Weiterhin können in den Si-Struktureinheiten der Formel I die Reste R¹ und/oder R² auch für Aryl stehen; Aryl besitzt dann die Bedeutung eines unsubstituierten oder inert substituierten aromatischen Kohlenwasserstoffrestes. Beispiele für Aryl sind Phenyl, Naphtyl, p-Diphenyl oder Alkylarylreste wie Tolyl, Ethylphenyl oder Propylphenyl. Ferner können die Reste R¹ und/oder R² auch für Arylalkyl stehen; Beispiele für Arylalkylgruppen sind Phenylmethyl oder Phenylethyl.

In einer bevorzugten Variante der Heteroelement enthaltenden Polycarbosilane auf Basis der Struktureinheiten der Formeln I und II steht der Substituent R¹ für Wasserstoff, niedriges Alkyl oder Phenyl. In einer anderen bevorzugten Variante der Polycarbosilane auf Basis der Struktureinheiten der Formeln I und II steht auch der Rest R² für niedriges Alkyl oder Phenyl. Niedriges Alkyl steht in diesen Varianten der Erfindung für die Reste R¹ und/oder R² mit der Bedeutung eines C1- bis C4-Alkylrestes, insbesondere für Methyl, Ethyl, Propyl oder Butyl. In den beiden vorstehenden Varianten der Heteroelement enthaltenden Polycarbosilane auf Basis von Struktureinheiten der Formeln I und II liegen dann beispielsweise als sehr bevorzugte R¹R²Si-Gruppen Hydrogenmethylsilylengruppen, Hydrogenethylsilylengruppen, Hydrogenphenylsilylengruppen, Dimethylsilylengruppen, Methylphenylsilylengruppen oder Diphenylsilylengruppen vor.

Die Brückeneinheit A, d.h. das die Si-Einheiten und Heteroelement-Einheiten verbindende Strukturelement, kann in den erfindungsgemäß hergestellten Heteroelement-Polycarbosilanen für einen geradkettigen oder verzweigten Alkylenrest stehen. Besonders vorteilhaft sind C1- bis C6-Alkylenreste; Beispiele hierfür sind Methylen, Ethylen, Trimethylen, Propylen (= - CH(CH₃)-CH₂-), Tetramethylen, Pentamethylen oder Hexamethylen; bevorzugt sind insbesondere die niederen Alkylenreste wie Methylen, Ethylen, Trimethylen oder Propylen. Ein ganz besonders bevorzugter Alkylenrest A ist aber Methylen. Die Brückeneinheit A kann in einer Variante der Erfindung auch ein Arylen-Rest sein. Unter Arylen-Resten werden hierbei insbesondere Reste wie Phenylen (bspw. p-Phenylen der Formel -C₆H₄-) oder auch p-Phenylendimethylen-Reste wie bspw. -CH₂-C₆H₄-CH₂- verstanden.

Das Molverhältnis, in den die Struktureinheiten der Formeln I und II im Heteroelement-Polycarbosilan vorliegen, kann in einem weiten Bereich derart variieren, daß der Anteil der Heteroelement-Struktureinheit der Formel II im Polycarbosilan von geringen Molanteilen, z.B. von 1 Mol-%, bis hin zu 50 Mol-% beträgt. Bevorzugte Heteroelement-Polycarbosilane der Erfindung zeichnen sich dadurch aus, daß die Struktureinheiten der Formeln I und II im Molverhältnis von 99:1 bis 1:1, insbesondere im Molverhältnis von 19:1 bis 1:1, im Polycarbosilan vorliegen.

Die Anzahl der Struktureinheiten die die Heteroelement enthaltenden Polycarbosilane aufbauen, liegt im allgemeinen bei Werten bis 10000, vorzugsweise bis 100. Die Heteroatom enthaltenden Polycarbosilane weisen damit mittlere Molekulargewichte im Bereich bis 500000 g/mol auf.

In einer Variante können die Polycarbosilane auch durch Verzweigungsgruppen der allgemeinen Formeln III und/oder IV 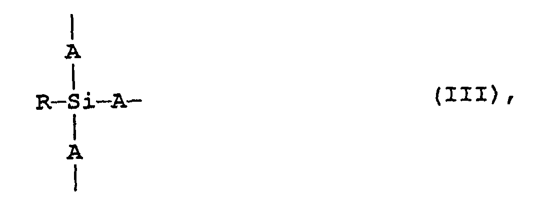 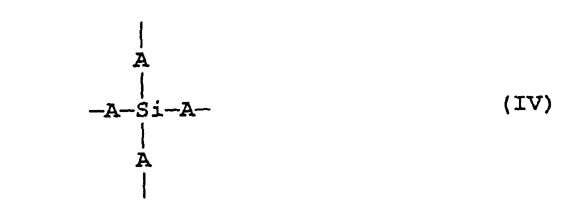 worin
A die obige Bedeutung und
R die für R² oben angegebene Bedeutung Alkyl, Cycloalkyl, Arylalkyl oder Aryl besitzt,
vernetzt sein. Durch die Verzweigungsgruppen III und/oder IV können in den Polycarbosilanen bis zu 80 %, vorzugsweise 20 bis 50 % der Si-Einheiten der Formel I ersetzt sein.

Die Polycarbosilane auf Basis der Struktureinheiten der Formeln I und II können verschiedene Endgruppen aufweisen. Die Endgruppen können herstellungsbedingt beispielsweise einerseits Halogensilylgruppen und/oder Halogenkohlenwasserstoffgruppen oder andererseits Kettenabbruchgruppen wie Trialkylsilylgruppen oder niedere Alkylgruppen sein. Beispiele für solche Endgruppen sind Dimethylchlorsilyl, Dimethylbromsilyl, Phenylmethylchlorsilyl, Phenylmethylbromsilyl, Diphenylchlorsilyl, Diphenylbromsilyl, Halogenalkylgruppen wir Chlormethyl, Brommethyl, Chlorethyl, Bromethyl, Chlorcyclohexyl, oder Kettenabbruchgruppen wie Trimethylsilyl, Diphenylmethylsilyl, Triphenylsilyl bzw. Methyl oder Ethyl.

Die erfindungsgemäß hergestellten Polycarbosilane sind feste oder flüssige, wachsartige, amorphe oder auch kristalline Materialien mit einer Struktur, in welcher im wesentlichen jedes Silicium-Atom und jedes Heteroelement nur an Kohlenstoff-Atome gebunden ist. Diese Heteroatome enthaltenden Polycarbosilane zeichnen sich dadurch aus, daß sie einen Si-Si-Bindungsanteil von maximal 20 % besitzen und allenfalls auch nur in geringem Maße Heteroelement-Heteroelement-Bindungen aufweisen. In den Beispielen liegt der Si-Si-Bindungsanteil sogar unter 5 %.

Zur Herstellung der Heteroelement enthaltenden Polycarbosilane stehen zwei Verfahrensvarianten zur Verfügung. In Verfahrensvariante a) werden die Edukte der Formeln V, VI und VII in einer metallorganischen Kondensationsreaktion in Gegenwart eines Alkalimetalles zu den Heteroelement-Polycarbosilanen umgesetzt; in Verfahrensvariante b) werden die Edukte der Formeln V, VI und VII dagegen in einer Grignard-Reaktion in Gegenwart von Magnesium zu den Heteroatom-Polycarbosilanen umgesetzt.

In beiden Verfahrensvarianten a) und b) werden Halogenatom enthaltende Heteroelement-Verbindungen der Formel VII eingesetzt, worin Rⁱ, M, Z, k und 1 die obigen Bedeutungen besitzen. Einige stellvertretende Beispiele für solche Heteroelement-Verbindungen der Formel VII, die sich zur Ausführung des erfindungsgemäßen Verfahrens eignen, sind: Bortrichlorid (BCl₃) oder organische Borhalogenide wie Ethylbordichlorid (C₂H₅BCl₂), Phenylbordichlorid (PhBCl₂; Ph = C₆H₅ = Phenyl), Phenylbordijodid (PhBJ₂); halogenhaltige Aluminiumalkyle wie Methylaluminiumdichlorid (CH₃AlCl₂), Ethylaluminiumdichlorid (C₂H₅AlCl₂); halogenhaltige Galliumalkyle wie Methylgalliumdichlorid (CH₃GaCl₂) oder Ethylgalliumdichlorid (C₂H₅GaCl₂) bzw. auch; halogenhaltige Alkylgermane wie Dimethylgermaniumdichlorid ((CH₃)₂GeCl₂), Methylgermaniumtrichlorid (CH₃GeCl₃); Zinnverbindungen wie Dimethylzinndichlorid ((CH₃)₂ShCl₂), Methylphenylzinndichlorid (CH₃PhSnCl₂) oder Diphenylzinndichlorid (Ph₂SnCl₂); Bleiverbindungen wie Dimethylbleidichlorid ((CH₃)₂PbCl₂), Diethylbleidichlorid ((C₂H₅)₂PbCl₂) oder Diphenylbleidichlorid (Ph₂PbCl₂); Phosphorverbindungen wie Phenylphosphordichlorid (PhPCl₂), Phosphortrichlorid (PCl₃), Phosphorpentachlorid (PCl₅); Arsenverbindungn wie Trimethylarsendichlorid ((CH₃)₃AsCl₂), Dimethylarsentrichlorid ((CH₃)₂AsCl₃), Phenylarsendichlorid (PhAsCl₂); Antimonverbindungen wie Trimethylantimondichlorid ((CH₃)₃SbCl₂), Methylantimondichlorid (CH₃SbCl₂), Triphenylantimondichlorid (Ph₃SbCl₂); Selendichlorid (SeCl₂); Tellurdichlorid (TeCl₂); Di-π-cyclopentadienyl-Metall-Dichloride der Formel Cp₂MZ₂ (Cp = C₅H₅ = Cyclopentadienyl; Z mit obiger Bedeutung) der Heteroelemente (M) Zinn, Titan, Zirkonium, Hafnium, Vanadium, Niob, Tantal, Chrom, Molybdän und Wolfram; sowie Cyclopentadienyl-Verbindungen wie π-Cyclopentadienyl-titan-trichlorid (CpTiCl₃),π-Cyclopentadienyl-niob-tetrachlorid (CpNbCl₄) oder π-Cyclopentadienyl-tantal-tetrachlorid (CpTaCl₄); Niobverbindungen wie Trimethyl-niobdichlorid ((CH₃)₃NbCl₂); Chromhalogenide wie Chromdi- (CrCl₂) oder Chromtrichlorid (CrCl₃); Mangandichlorid (MnCl₂); Nickeldichlorid (NiCl₂); Platinverbindungen wie Dichloro-cyclooctadienyl-Verbindungen von Palladium (PdCl₂(η⁴-C₈H₁₂)) und Platin (PtCl₂(η⁴-C₈H₁₂)). Es können auch die entsprechenden Bromide oder Jodide der Heteroelementverbindungen anstelle der aufgeführten Chloride eingesetzt werden. Als Heteroelement-Verbindungen eignen sich für das erfindungsgemäße Verfahren zur Herstellung der erfindungsgemäßen Heteroelement-Polycarbosilane besonders Phenylbordichlorid sowie die Cyclopentadienyl-Komplexverbindungen Di-η-cyclopentadienyl-titan-dichlorid, Di-π-cyclopentadienyl-zirkonium-dichlorid und Di-π-cyclopentadienyl-hafnium-dichlorid.

Die im erfindungsgemäßen Verfahren eingesetzten Heteroelement-Verbindungen der Formel VII sind an sich bekannt und darüber hinaus entweder kommerziell erhältlich oder leicht nach an sich bekannten Verfahren herstellbar. Da die Verfügbarkeit der eingesetzten Heteroelement-Verbindungen der Formel VII somit für den Fachmann kein Problem darstellt, soll deren Herstellung hier nur anhand einiger typischer, stellvertretender Beispiele kurz skizziert werden. So lassen sich beispielsweise alkylsubstituierte Heteroelement-Verbindungen durch Umalkylierungsreaktionen mit z.B. Aluminiumtrialkylen aus den zugrunde liegenden Heteroelement-Halogeniden herstellen; beispielsweise kann das Ethylbordichlorid durch Umsetzung von Aluminiumtriethyl mit Bortrichlorid gebildet werden und danach aus dem Reaktionsgemisch leicht durch destillative Abtrennung gewonnen werden. Phenylsubstituierte Heteroelement-Verbindungen können in analogerweise wie die alkylsubstituierten Heteroelement-Verbindungen hergestellt werden. So kann beispielsweise das Phenylbordichlorid durch Umsetzung von Tetraphenylzinn mit Bortrichlorid erhalten werden, wobei als weiteres Produkt Phenylzinntrichlorid anfällt; das Phenylbordichlorid läßt sich aus dem Reaktionsgemisch durch destillative Abtrennung gewinnen. Cyklopentadienyl-substituierte Heteroelement-Verbindungen können in einfacher Weise durch Umsetzung der zugrunde liegenden Metallchloride (z.B. MCl₄) mit Cyclopentadienylnatrium bzw. Cyclopentadienyllithium (NaC₅H₅ bzw. LiC₅H₅) oder mit Dicyclopentadienylmagnesium (Mg(C₅H₅)₂) hergestellt werden und lassen sich nach abdestillieren des für die Umsetzung verwendeten Lösungsmittels (meist Xylol bzw. THF) durch Lösungsmittelextraktion (beispielsweise mit Chlorform) aus dem zurückbleibenden festen Rückstand gewinnen. Dieses Verfahren hat sich insbesondere zur Herstellung der Di-π-cyclopentadienyl-dichloride der Heteroelemente Titan, Zirkon und Hafnium bewährt. Andere Di-π-cyclopentadienyl-dihalogenide, nämlich die Bromide oder Jodide, dieser Heteroelemente lassen sich z.B. aus den vorstehenden Chloriden durch Umhalogenierung mit Bortribromid oder Bortrijodid herstellen. Durch Molmengen-gesteuerte Cyclopentadienyl-Übertragung von Dicyclopentadienylmagnesium auf die Chloride der Heteroelemente, beispielsweise auf Titantetrachlorid, kann die Anzahl der Cyclopentadienyl-Reste in den Heteroelement-Verbindungen der Formel VII auch von der Anzahl zwei abweichend variiert werden; z.B. läßt sich so π-Cyclopentadienyl-titan-trichlorid herstellen. Auch durch Liganden-Synproportionierung kann die Anzahl der Cyclopentadienyl-Reste variiert werden; z.B. wird π-Cyclopentadienyl-titan-trichlorid auch durch Umsetzung von Dicyclopentadienyl-titan-dichlorid mit Titantetrachlorid erhalten. Bei Cyclopentadienyl-substituierten Heteroelement-Verbindungen mit der formalen Wertigkeit m = 5 lassen sich die Di-π-cyclopentadienyl-Heteroelement-Dichloride, wie z.B. nachfolgend für Niob angegeben, herstellen. So erfolgt die Herstellung von Dicyclopentadienylniobdichlorid ausgehend von Niobpentachlorid und Cyclopentadienylnatrium in einem Eintopfverfahren über einen p-Oxo-Komplex der Zusammensetzung [{NbCl(η-C₅H₅)₂}₂O]Cl₂, der nachfolgend durch Reduktion mit Zinndichlorid in das Produkt übergeführt wird. Cyclopentadienyl-substituierte Heteroelement-Verbindungen der Formel VII können beispielsweise im Falle von Palladium durch Umsetzung von Cyclooctadien mit Palladiumdichlorid, welches zuvor in konzentrierte Salzsäure gelöst und danach in Äthanol verdünnt wurde, erhalten werden. Im Falle von Platin wird das Cyclooctadien z.B. mit Dikaliumtetrachloroplatinat (K₂[PtCl₄]) hergestellt.

Als zweite Reaktionskomponente werden in beiden Verfahrensvarianten a) und b) an sich bekannte Dihalogensilane der Formel V eingesetzt, worin R¹, R² und X die obige Bedeutung besitzen. Beispiele für solche Dihalogensilane, die sich zur Ausführung des erfindungsgemäßen Verfahrens eignen sind Dihalogensilane der allgemeinen Formel V, insbesondere Dichlor- oder Dibromsilane, in denen R¹ Wasserstoff ist und R² dann für Alkyl, Cycloalkyl, Arylalkyl oder Aryl steht oder solche Dihalogensilane der Formel IV, in denen R¹ und/oder R² für Alkyl, Cycloalkyl, Arylalkyl oder Aryl stehen. Die Reste Alkyl, Cycloalkyl, Arylalkyl und Aryl stehen hierbei mit den oben bei der Beschreibung der erfindungsgemäßen Heteroelement-Polycarbosilane angegebenen Bedeutungen. In bevorzugten Ausgestaltungen des Verfahrens ist einerseits R¹ Wasserstoff, niedriges Alkyl mit 1 bis 4 C-Atomen, d.h. insbesondere Methyl, Ethyl, Propyl oder Butyl, oder Phenyl; R² ist in bevorzugten Ausgestaltungen ebenfalls niedriges Alkyl mit der vorstehenden Bedeutung oder Phenyl. Einige stellvertretende Beispiele für solche Dihalogensilane, die sich zur Ausführung des erfindungsgemäßen Verfahrens besonders eignen sind Hydrogenmethylsilyldichlorid, Hydrogenethyldichlorsilan, Hydrogenphenyldichlorsilan, Dimethyldichlorsilan, Diethyldichlorsilan, Methylphenyldichlorsilan und Diphenyldichlorsilan sowie die entsprechenden Dibromsilane.

Die dritte, in beiden Verfahrensvarianten a) und b) eingesetzte Reaktionskomponente ist ein an sich bekannter Dihalogenkohlenwasserstoff der Formel VI, worin A und Y die obige Bedeutung besitzen. A kann somit für einen geradkettigen oder verzweigten Alkylenrest stehen; vorteilhaft sind C1- bis C6-Alkylenreste, insbesondere aber die C1- bis C3-Alkylenreste Methylen, Ethylen, Trimethylen oder Propylen. Als Dihalogenkohlenwasserstoffe eignen sich für das erfindungsgemäße Verfahren besonders Dijod-, Dibrom- oder Dichlorkohlenwasserstoffe. Beispiele für Dihalogenkohlenwasserstoffe sind Methylenchlorid, Methylenbromid, 1,2-Dichlorethan, 1,2-Dibromethan, 1,3-Dichlorpropan, 1,3-Dibrompropan, 1,3-Dijodpropan und 1,2-Dibrompropan. Der Dihalogenkohlenwasserstoff der Formel VI kann in einer Variante der Erfindung auch ein aromatischer Dihalogenkohlenwasserstoff sein. Solche aromatischen Dihalogenkohlenwasserstoffe können z.B. Dihalogenbenzol- oder Dihalogenxylolderivate wie insbesondere p-Dibrombenzol (Br-C₆H₄-Br) -Br) oder p-Di- (brommethyl) -benzol (BrCH₂-C₆H₄-CH₂Br).

Erfindungsgemäß werden zur Herstellung von Polycarbosilanen auf Basis von Struktureinheiten der allgemeinen Formeln I und II die Heteroelement-Verbindung der Formel VII mit wenigstens einem Dihalogensilan der allgemeinen Formel V und mit wenigstens einem Dihalogenkohlenwasserstoff der allgemeinen Formel VI in Gegenwart eines Alkalimetalles oder Magnesium miteinander umgesetzt. Durch das erfindungsgemäße Verfahren wird somit eine einfache und allgemein anwendbare Methode zur bequemen Herstellung der Heteroelement-haltigen Polycarbosilane auf Basis der Struktureinheiten der Formeln I und II zur Verfügung gestellt. Das erfindungsgemäße Verfahren ermöglicht durch Variation von Art und Zahl der eingesetzten Reaktanden, d.h. der eingesetzten Heteroelement-Verbindung, des eingesetzten Dihalogensilans und des eingesetzten Dihalogenkohlenwasserstoffes, die Herstellung einer Vielzahl interessanter Heteroelement-haltiger Polycarbosilane auf Basis der Struktureinheiten der allgemeinen Formeln I und II.

In einer Variante des erfindungsgemäßen Verfahrens wird die Heteroelement-Verbindung der Formel VII mit Mischungen von unterschiedlich substituierten Dihalogensilanen der allgemeinen Formel V und mit Mischungen von Dihalogenkohlenwasserstoffen der allgemeinen Formel VI mit sich unterscheidenden Gruppen A miteinander umgesetzt. Durch die Umsetzung einer Heteroelement-Verbindung mit Dihalogensilangemischen und mit Dihalogenkohlenwasserstoffgemischen erhält man so z.B. Heteroelement-Polycarbosilane, in denen verschiedene Struktureinheiten der allgemeinen Formel I nebeneinander vorliegen, die sich entsprechend der gewählten Art und Anzahl der verwendeten Reaktanden unabhängig voneinander in den Substituenten R¹ und/oder R² und/oder den Resten A unterscheiden können; ferner können sich dann auch die Reste A in verschiedenen Struktureinheiten der allgemeinen Formel II der Heteroatom enthaltenden Polycarbosilane unterscheiden. Gewöhnlich wird die Heteroelement-Verbindung der Formel VII aber nicht mit mehr als maximal 3 unterschiedlichen Dihalogensilanen und mit nicht mehr als maximal 3 unterschiedlichen Dihalogenkohlenwasserstoffen gleichzeitig umgesetzt. Zweckmäßig ist insbesondere die Umsetzung der Heteroelement-Verbindung mit Gemischen aus nicht mehr als maximal 3 verschiedenen Dihalogensilanen und mit nur einem Dihalogenkohlenwasserstoff bzw. in einer anderen zweckmäßigen Variante die Umsetzung der Heteroelement-Verbindung mit nur einem Dihalogensilan und einem Gemisch aus maximal 3 verschiedenen Dihalogenkohlenwasserstoffen. Die Menge der eingesetzten Dihalogensilane oder deren Gemische zur Menge der eingesetzten Heteroelement-Verbindung kann in einem weiten Bereich von nur geringen Anteilen anHeteroelement-Verbindung bis hin zu 50 Mol-% (bezogen auf die Summe aus Dihalogensilan und Heteroelement-Verbindung) schwanken. Bevorzugt werden die Mengen an Dihalogensilanen und Heteroelement-Verbindung so gewählt, daß das molare Verhältnis aller Dihalogensilane der Formel V zur Heteroelement-Verbindung der Formel VII 99:1 bis 1:1 vorzugsweise von 19:1 bis 1:1 beträgt. Die Menge der eingesetzten Dihalogensilane und der eingesetzten Heteroelement-Verbindung einerseits und die Menge der eingesetzten Dihalogenkohlenwasserstoffe andererseits wird bevorzugt so bemessen sein, daß insgesamt ein Molverhältnis der Summe aus Dihalogensilanen und Heteroelement-Verbindung einerseits zu den Dihalogenkohlenwasserstoffen andererseits von etwa 1:1 vorliegt; im allgemeinen sind aber auch Abweichungen von diesem Molverhältnis bis zu 20 % möglich.

In bevorzugten Ausgestaltungen der beiden erfindungsgemäßen Verfahrensvarianten a) und b) wird die Heteroelement-Verbindung der Formel VII nur mit einem einzigen Dihalogensilan der Formel V und mit nur einem einzigen Dihalogenkohlenwasserstoff der Formel VI umgesetzt. Nach dieser Verfahrensvariante werden sehr einheitliche kettenförmige und Heteroelement-haltige Polycarbosilane erhalten, wobei die Reste R¹ und R² in allen Struktureinheiten der allgemeinen Formel I dieses Polycarbosilans und der Rest A in allen Struktureinheiten der allgemeinen Formel I und II des Polycarbosilans jeweils für sich nur eine einzige Bedeutung besitzen. Das Molverhältnis der drei Reaktanden Dihalogensilan, Heteroelement-Verbindung und Dihalogenkohlenwasserstoff beträgt in dieser Verfahrensvariante bevorzugt etwa (2-n) :n:2, in dem n die eingesetzte Molmenge der Heteroelement-Verbindung ist und einen Wert von bis zu 1 annehmen kann, wobei Werte von n = 0,1 bis n = 1 bevorzugt sind; es sind aber auch Abweichungen vom genannten Molverhältnis im Hinblick auf die Summe aus Dihalogensilan und Heteroelement-Verbindung einerseits und dem Dihalogenkohlenwasserstoff andererseits von bis zu 20 % möglich.

In einer weiteren Ausgestaltung der erfindungsgemäßen Verfahrensvarianten a) und b) ist es möglich, sofern erwünscht, eine zusätzliche gezielte Vernetzung der linearen Polycarbosilanketten auf Basis der allgemeinen Struktureinheiten der Formeln I und II zu bewirken. Je nach angestrebtem Vernetzungsgrad werden dann bis zu 50 Mol-% des eingesetzten Dihalogensilans V durch ein Trihalogensilan der Formel RSiX₃ ersetzt, worin X die Bedeutung Halogen, vorzugsweise Chlor oder Brom, und R die für R² oben angegebene Bedeutung Alkyl, Cycloalkyl, Arylalkyl oder Aryl besitzt. Das Trihalogensilan RSiX₃ kann entweder bereits zu Beginn der Umsetzung der Reaktanden dem Reaktionsgemisch zugemischt werden; es kann aber auch später im Verlaufe der Reaktion dem Reaktandengemisch zugetropft oder eingeleitet werden. Beispiele für verwendbare Trihalogensilane RSiX₃ sind Trichlorsilan, Methyltribromsilan, Methyltrichlorsilan oder Phenyltrichlorsilan. Nach dieser Verfahrensvariante werden vernetzte Heteroelement-enthaltende Polycarbosilane auf Basis der Strukturelemente der allgemeinen Formel I und II erhalten, die zusätzlich Verzweigungsgruppen der Formel III enthalten.

Ferner läßt sich in einer weiteren Ausgestaltung der Verfahrensvarianten a) und b) eine Vernetzung der linearen Heteroelement-haltigen Polycarbosilanketten auf Basis der allgemeinen Strukturformeln I und II durch Zugabe von Tetrahalogensilanen wie Tetrachlorsilan oder Tetrabromsilan erreichen. Es werden dann vernetzte Heteroelement-haltige Polycarbosilane auf Basis der Struktureinheiten der allgemeinen Formeln I und II erhalten, die zusätzlich Verzweigungsgruppen der Formel IV enthalten.

Darüber hinaus kann in einer weiteren Verfahrens ausgestaltung der Kondensationsgrad der herzustellenden kettenförmigen oder vernetzten Heteroelement-haltigen Polycarbosilane auf Basis der allgemeinen Struktureinheiten der Formeln I und II gesteuert werden, indem die Kondensation durch Zusatz von Kondensationsabbruch-Reagentien gestoppt wird. Geeignete Reagentien für den Abbruch der Kondensationsreaktion sind Monohalogensilane R'₃SiX, worin X die Bedeutung Halogen, vorzugsweise Chlor oder Brom, und R' die für R² oben angegebene Bedeutung Alkyl, Cycloalkyl, Arylalkyl oder Aryl besitzt; weitere geeignete Reagentien für den Abbruch der Kondensationsreaktion sind Monohalogenkohlenwasserstoffe R''Y, worin Y die Bedeutung Jod, Brom oder Chlor und R'' die Bedeutung Alkyl oder Cycloalkyl besitzt. Beispiele für geeignete Monohalogensilane sind Trimethylchlorsilan, Trimethylbromsilan oder Diphenylmethylchlorsilan. Beispiele für geeignete Monohalogenkohlenwasserstoffe sind Methylbromid oder Methylchlorid.

Die Art der Endgruppen, die in den durch das erfindungsgemäße Verfahren hergestellten Heteroelement-haltigen Polycarbosilanen vorliegen, hängt davon ab, ob das Verfahren mit oder ohne Kettenabbruch-Reagentien durchgeführt wird. Es werden die oben im Zusammenhang mit den Polycarbosilanen bereits beschriebenen Endgruppen erhalten.

Während die vorstehenden Ausführungen sowohl für das Verfahren zur Herstellung von Heteroelement-haltigen Polycarbosilanen in Gegenwart eines Alkalimetalles (Variante a) als auch für die Herstellung des Polycarbosilans durch Grignard-Kondensation in Gegenwart von Magnesium (Variante b) gelten, werden nachfolgend noch einige Besonderheiten der beiden Verfahrensvarianten a) und b) gesondert beschrieben.

In der Verfahrensvariante a) zur Herstellung von Heteroelement-haltigen Polycarbosilanen auf Basis von Struktureinheiten der Formeln I und II werden die Heteroelement-Verbindung der Formel VII, Dihalogensilane der Formel V und Dihalogenkohlenwasserstoffe der Formel VI in Gegenwart eines Alkalimetalles in einem inerten organischen flüssigen Medium miteinander umgesetzt.

Das in der erfindungsgemäßen Verfahrensvariante a) anwendbare Alkalimetall kann beispielsweise Lithium, Natrium oder Kalium sein. Das bevorzugte Alkalimetall ist Natrium, da es im allgemeinen die höchsten Ausbeuten an Polycarbosilanen ergibt und am wenigsten zu Nebenreaktionen führt. Zur Sicherstellung einer vollständigen Umsetzung wird ein Arbeiten mit einem geringen Überschuß an Alkalimetall bevorzugt. Die Menge des zu verwendenden Alkalimetalls beträgt etwa 2,2 Mol pro Mol aller eingesetzten Dihalogenverbindungen, d.h. beispielsweise für die Umsetzung von 0,5 Mol Heteroelement-Verbindung, 0,5 Mol Dihalogensilan und 1 Mol Dihalogenkohlenwasserstoff werden ca. 4,4 Mol Alkalimetall benötigt.

Das organische, flüssige Medium für Verfahrensvariante a), in welchem die Reaktion stattfindet, kann ein beliebiges mit Alkalimetallen verträgliches Lösungsmittel sein, in dem die als Reaktanden verwendeten Heteroelement-Verbindungen, Dihalogensilane und Dihalogenkohlenwasserstoffe löslich sind. Vorzugsweise ist dieses organische, flüssige Medium auch ein Lösungsmittel für die nach dem erfindungsgemäßen Verfahren herzustellenden Polycarbosilane. Geeignete Lösungsmittel können z.B. Kohlenwasserstoffe, wie Toluol, Xylol oder Paraffine, Ether wie Tetrahydrofuran, Dioxan oder Dibutylether, Alkylenglykolether, z.B. Ethylenglykolether, wie Diethylenglykoldialkylether, Propylenglykolether, Polyethylenglykolether oder Polypropylenglykolether, aber auch stickstoffhaltige Lösungsmittel wie Ethylendiamin oder deren Gemische sein. Vorteilhaft werden solche Lösungsmittel verwendet, deren Siedetemperaturen oberhalb des Schmelzpunktes des eingesetzten Alkalimetalles liegt. Ein bevorzugtes Lösungsmittel ist Xylol. Die Menge des Lösungsmittels ist in weiten Bereichen variabel. Der Einsatz großer Lösungsmittelmengen führt z.B. zu Polycarbosilanen mit niedrigem Molekulargewicht. Die bei der Umsetzung anfallenden Alkalimetallhalogenide sind gewöhnlich unlöslich und lassen sich daher leicht durch Filtration entfernen.

Die Verfahrensvariante a) kann in weiten Temperaturbereichen durchgeführt werden, wobei die Reaktionstemperatur vorzugsweise jedoch bei Temperaturen von ca. 10 bis 180 °C gehalten wird. Die Reaktion verläuft exotherm und wird vorzugsweise beim Schmelzpunkt des eingesetzten Alkalimetalles, z.B. bei Verwendung von Natrium bei ca. 100 °C, begonnen. Während der Reaktion ist keine Wärmezufuhr von außen erforderlich. Falls die Reaktion zu heftig abläuft, kann gegebenenfalls auch gekühlt werden; grundsätzlich ist eine Kühlung aber nicht zwingend. Weiterhin wird die Reaktion im allgemeinen unter einem geeigneten Schutzgas durchgeführt. Geeignete Schutzgase sind z.B. Stickstoff oder Argon.

Die Reaktion nach Verfahrensvariante a) wird im allgemeinen so geführt, daß zunächst eine Suspension des Alkalimetalles in dem Lösungsmittel erzeugt wird. Bevorzugte Lösungsmittel zur Herstellung der Suspension sind Kohlenwasserstoffe wie Xylol oder Dekalin, in welche das Alkalimetall in Form kleiner Stücke eingebracht und anschließend unter intensivem Rühren auf Temperaturen oberhalb des Schmelzpunktes des Alkalimetalles erhitzt wird. Die so erhaltene Alkalimetallsuspension kann entweder nach Abkühlung oder direkt für die weitere Umsetzung verwendet werden. Hierzu werden die übrigen Reaktanden (Heteroelement-Verbindung, Dihalogensilane, Dihalogenkohlenwasserstoffe) in die Alkalimetallsuspension eingebracht. Dies geschieht entweder durch gleichzeitiges Zutropfen der Reaktanden zur Metallsuspension oder durch gleichzeitiges Einleiten der Reaktanden direkt in die Metallsuspension. Insbesondere erweist es sich als vorteilhaft, wenn die Reaktanden bereits vor dem Einleiten miteinander vermischt und gegebenenfalls mit einem geeigneten Lösungsmittel verdünnt werden.

Nach erfolgter Umsetzung kann man das Polycarbosilan durch jede geeignete Methode aus dem Reaktionsgemisch der Verfahrensvariante a) gewinnen. Ist das Polycarbosilan im Lösungsmittel löslich, so lassen sich die sonstigen unlöslichen Komponenten durch Filtration abtrennen. Das im Lösungsmittel zurückbleibende Polycarbosilan kann durch Waschen mit Wasser gereinigt und durch Entzug des Lösungsmittels zu einem Pulver getrocknet werden. Sofern überschüssiges Alkalimetall verwendet wurde, wird dieses vor der Isolierung des Polycarbosilans mit einem geeignetem Alkohol in an sich üblicher Weise solvolysiert. Geeignete Alkohole sind je nach verwendetem Alkalimetall Methanol, Ethanol, Isopropanol, Tertiärbutanol. Die gebildeten Alkalimetallalkoholate werden anschließend durch Zugabe von Wasser weiter zersetzt und die sich abscheidenden Alkalimetallsalze durch Filtration entfernt. Sind die gebildeten Polycarbosilane im Lösungsmittel aber unlöslich, so können sie durch ein geeignetes anderes Lösungsmittel extrahiert werden, anschließend durch Waschen mit Wasser gereinigt und durch Entzug des Lösungsmittels zu einem Pulver getrocknet werden.

In Verfahrensvariante b) werden zur Herstellung von Heteroelement-haltigen Polycarbosilanen auf Basis von Struktureinheiten der Formeln I und II die Heteroelement-Verbindung der Formel VII, Dihalogensilane der Formel V und Dihalogenkohlenwasserstoffe der Formel VI in Gegenwart von Magnesium und in Gegenwart eines für Grignard-Reaktionen geeigneten organischen Lösungsmittels in einer Grignard-Polykondensation miteinander umgesetzt.

Das in der erfindungsgemäßen Verfahrensvariante b) eingesetzte Magnesium wird als Metall in der Form von Magnesiumpulver, Magnesiumspänen oder Magnesiumgries etc. verwendet. Das Magnesiummetall kann bevorzugt vor der Verwendung durch an sich dem Fachmann bekannte Maßnahmen für die Verwendung in der Grignard-Reaktion vorbehandelt werden. z.B. ist es empfehlenswert, das Magnesium vor der Reaktion zu entfetten und durch Trocknen von anhaftender Feuchtigkeit zu befreien oder gegebenenfalls mit geringen Mengen an niederen Brom- oder Jod-haltigen Kohlenwasserstoffen wie Dibrommethan, Dibrompropan, Dijodpropan etc., vorzugsweise aber mit elementarem Jod anzuätzen. Die Menge des zu verwendenden Magnesiummetalls beträgt etwa 2 Mol bezogen auf die Summe an eingesetzter Heteroelement-Verbindung und Dihalogensilan einerseits bzw. den eingesetzten Dibromkohlenwasserstoff andererseits. Die Summe der Mengen aus Heteroelement-Verbindung und Dihalogensilan wird bevorzugt in etwa äquimolarer Menge zum Dihalogenkohlenwasserstoff in der Reaktion nach Verfahrensvariante b) eingesetzt.

Das organische Lösungsmittel, in welchem die Grignard-Polykondensationsreaktion (Verfahrensvariante b) stattfindet, kann ein beliebiges, trockenes mit Grignard-Reagentien verträgliches Lösungsmittel sein, insbesondere ein Ether wie Diethylether, Dioxan, Tetrahydrofuran etc.

Die erfindungsgemäße Grignard-Polykondensationsreaktion (Verfahrensvariante b) wird z.B. im allgemeinen so geführt, daß zunächst Heteroelement-Verbindung und Dihalogensilan mit dem Magnesium im Lösungsmittel, bevorzugt in Ether oder Tetrahydrofuran, vorgelegt werden. Anschließend wird tropfenweise der Dihalogenkohlenwasserstoff (vorzugsweise das Bromderivat) bis zum Start der Reaktion zugesetzt und die exotherme Reaktion durch Einstellung der Zutropfgeschwindigkeit von Dihalogenkohlenwasserstoff so kontrolliert, daß gleichmäßiges Sieden stattfindet. Für gute Ergebnisse sollten trockene Reaktionsbedingungen eingehalten und die Reaktion unter Schutzgasatmosphäre und unter Rühren ausgeführt werden. Geeignete Schutzgase sind z.B. Stickstoff oder Edelgase wie Argon. Die sich während der Reaktion einstellende Temperatur hängt vom Siedepunkt des verwendeten Lösungsmittels ab. Nach Abschluß der exothermen Reaktion wird, um sicherzustellen, daß eine vollständige Umsetzung stattfindet, die Reaktionsmischung in der Regel noch bei Raumtemperatur über einen längeren Zeitraum gerührt. Typischerweise wird die Reaktion in einem Zeitraum von 1 bis 48 Stunden ausgeführt. Zur Aufarbeitung des Reaktionsgemisches und zur Isolierung des gebildeten Polycarbosilans kann in an sich bekanner Weise für die Aufarbeitung von Grignard-Reaktionsansätzen vorgegangen werden. Beispielsweise werden Reste von nicht umgesetzten Grignard-Reagentien durch Zugabe von oder Eingießen in Wasser, Salzsäure, wäßrige Ammoniumchloridlösung etc. zersetzt und das im Lösungsmittel gelöste Polycarbosilan von der wäßrigen Phase abgetrennt bzw. gegebenenfalls mit einem geeigneten organischen Lösungsmittel, beispielsweise mit halogenierten Kohlenwasserstoffen wie Methylenchlorid, Chloroform, Tetrachlorkohlenwasserstoff oder Fluorchlorkohlenwasserstoffen aus dem Reaktionsgemisch extrahiert und in an sich bekannter Weise durch Entfernung des Lösungsmittels als Substanz gewonnen.

Die obigen erfindungsgemäßen Verfahrensvarianten gestatten es, in vorteilhafter Weise Heteroelement-haltige Polycarbosilane direkt aus monomeren Heteroelement-Verbindungen, Dihalogensilanen und Dihalogenkohlenwasserstoffen herzustellen. Im Gegensatz zum Stand der Technik muß somit kein Umweg über Polysilane und/oder Polycarbosilane beschritten werden, in die nachträglich durch pyrolytische Verfahrensweisen das Heteroelement unter Einsatz von sauerstoffhaltigen Heteroelement-Verbindungen (z.B. Polyborodiphenylsiloxan, Titantetraalkoxide, Aluminiumtrialkoxide, Zirkoniumtetraacetylacetonat etc.) eingeführt werden muß. Während daher bei den Verfahren des Standes der Technik in der Regel Heteroelement-Sauerstoff-Silicium-Bindungen durch pyrolytische Prozesse gebildet werden, also ohne jede Möglichkeit einer Kontrolle der Einbauart und -rate, handelt es sich bei dem erfindungsgemäßen Verfahren zur Herstellung Heteroelement-haltiger Polycarbosilane um ein sehr schonendes Verfahren, welches es gestattet, diese Polycarbosilane mit hoher Reinheit herzustellen. Das erfindungsgemäße Verfahren ermöglicht darüber hinaus die Herstellung sauerstofffreier Heteroelement-haltiger Polycarbosilane. Die Sauerstofffreiheit der Heteroelement-haltigen Polycarbosilane ist von besonderem Voreil, insbesondere im Hinblick auf die nachfolgende thermische Umwandlung in keramische Produkte. Die thermische Umwandlung von sauerstoffhaltigen Polycarbosilan-Vorstufen zu keramischen Produkten findet in der Regel unter Bildung von Siliciumdioxid und Metalloxiden sowie unter hohen Gewichtsverlusten statt und führt zu schlechteren Werkstoffeigenschaften der erhaltenen keramischen Produkte. Die Heteroelementhaltigen Polycarbosilane eignen sich dagegen als wertvolle Ausgangspolymere (Precursor) für die Herstellung technisch hochwertiger Siliciumcarbid-Keramik-Produkte (z.B. Fasern usw.) sowie auch hervorragend für diverse andere technische Anwendungen, z.B. als Sinterzusätze, Oberflächenimprägnierungsmittel, Bindemittel oder Beschichtungsmaterialien.

Die Erfindung wird im folgenden anhand von Beispielen weiter erläutert, ohne sie jedoch dadurch in ihrem Umfange zu beschränken. Die in den Beispielen enthaltenen Teil- und Prozentangaben sind als Gewichtsangaben zu verstehen. Alle Umsetzungen wurden in Standard-Laboratoriumsapparaturen und soweit notwendig unter einer Schutzgasatmosphäre aus Stickstoff durchgeführt.

### Beispiel 1

In einer Suspension von 0,75 Mol (17,25 g) Natrium in 250 ml Xylol wurde bei einer Temperatur von 138 °C ein Gemisch aus 0,15 Mol Dichlordiphenylsilan (38 g; 31,54 ml), 0,167 Mol Methylenbromid (29 g; 11,7 ml) und 0,017 Mol Dichlorphenylboran (2,7 g; 2,25 ml) zugetropft. Die Zutropfzeit betrug eine Stunde. Nach einer Nachreaktionszeit von einer weiteren Stunde wurde die abgekühlte Lösung unter Schutzgas filtriert und der Rückstand mehrfach mit Xylol polycarbosilanfrei gewaschen. Aus den vereinten Xylol-Extrakten wurde am Rotationsverdampfer das Lösungsmittel abdestilliert und das isolierte Polycarbosilan bei 100 °C im Hochvakuum getrocknet.

Die Ausbeute an festem, gelbem Polycarbosilan betrug 30,5 g (98 %). Die Elementaranalyse ergab 13,4 % Si; 80 % C; 6,21 % H und 0,35 % B. Im IR-Spektrum konnten die typischen Polyphenylcarbosilanbanden identifiziert werden. Die charakteristische B-C-Schwingung ließ sich bei 1350 cm⁻¹ nachweisen. Das ¹H-NMR-Spektrum zeigte Peaks bei 7,9 ppm (Phenyl-B); 7,3 ppm (Phenyl-Si) und 0 - 2,3 ppm (CH₂). Das ¹¹B-NMR-Spektrum wies ein breites Signal um 30 ppm auf.

### Beispiel 2

Der Versuch wurde analog zu Beispiel 1 durchgeführt. Die Ansatzmengen betrugen 0,076 Mol Ph₂SiCl₂ (19,24 g; 15,98 ml); 0,151 Mol CH₂Br₂ (26,25 g; 10,54 ml) und 0,076 Mol PhBCl₂ (12,07 g; 10,04 ml).

Bei dem mit 88 %iger Ausbeute (19,9 g) isolierten, borhaltigen Polycarbosilan handelte es sich um ein schwarzbraunes, hochviskoses Produkt. Die Elementaranalyse ergab: 10 % Si; 75,9 % C; 6,2 % H und 2,5 % B. Das IR-Spektrum zeigte die erwartete Intensitätszunahme der B-C-Schwingungsbande bei 1350 cm⁻¹. Die Daten des ¹H-NMR-Spektrums waren: 7,6 - 8,3 ppm (Phenyl-B); 6,3 - 7,7 ppm (Phenyl-Si) und 0 - 3 ppm (CH₂). Im ¹¹B-NMR-Spektrum wurde bei etwa 30 ppm der B-Peak gefunden.

### Beispiel 3

Der Versuch wurde analog zu Beispiel 1 durchgeführt. Die eingesetzten Stoffmengen betrugen: 0,076 Mol Dichlordimethylsilan (9,81 g; 9,22 ml); 0,151 Mol Methylenbromid (26,25 g; 10,54 ml) und 0,076 Mol Dichlorphenylboran (12,07 g; 10,04 ml).

Ein hochviskoses, braunes Polycarbosilan konnte in 67 %iger Ausbeute (8,9 g) isoliert werden. Die Elementaranalyse ergab: 16 % Si; 69 % C; 8,4 % H; 3 % B. Im IR-Spektrum wurde außer den charakteristischen Schwingungsbanden eines Polymethylcarbosilans die B-C-Schwingung bei 1350 cm⁻¹ gefunden. Das ¹H-NMR-Spektrum zeigte Signale bei: 7,6 - 8,3 ppm (Phenyl-B) und 0 - 3 ppm (CH₃, CH₂). Das Borsignal lag im ¹¹B-NMR-Spektrum bei 30 ppm.

### Beispiel 4

25,3 g Natrium (1,1 Mol) und 12,45 g Titanocendichlorid (0,05 Mol) wurden in 350 ml Xylol in einem 1 1 Dreihalskolben mit Rückflußkühler, Überkopfrührer und Tropftrichter vorgelegt. Bei 138 °C erfolgte unter Schutzgas innerhalb einer Stunde die Zugabe einer Reaktionsmischung aus 43,46 g Methylenbromid (0,25 Mol; 17,45 ml) und 50,64 g Diphenyldichlorsilan (0,2 Mol; 42,06 ml). Nach einer Nachreaktionszeit von einer weiteren Stunde wurde die abgekühlte Reaktionsmischung abfiltriert, der Rückstand mehrfach mit Xylol gewaschen und aus den vereinten Xylol-Extrakten das Lösungsmittel am Rotationsverdampfer abdestilliert. Anschließend wurde das isolierte Polycarbosilan im Hochvakuum bei 100 °C noch mehrere Stunden getrocknet.

Die Ausbeute an rotem, hartem Feststoff lag bei 85,3 % (20,8 g). Die Elementaranalyse ergab: 16,1 % Si; 75,8 % C; 5,1 % H; 2,4 % Ti. Das IR-Spektrum zeigte die für Polyphenylcarbosilanstrukturen charakteristischen Schwingungsbanden. Zusätzlich lagen bei 1440, 880 und 820 cm⁻¹ die typischen Absorptionsbanden der Cyclopentadienylgruppen. Die Ti-C-Schwingung lag bei 520 cm⁻¹. Im ¹H-NMR-Spektrum wurden im Bereich von 6,3 - 7,7 ppm die Phenyl-, von 5 - 6,3 ppm die Cyclopentadienyl- und von 0 - 3 ppm die Alkylprotonen-Signale gefunden. Das ¹³C-NMR-Spektrum zeigte drei Signalbereiche: bei 0 bis 50 ppm (Alkyl), bei 114 bis 117 ppm (Cyclopentadienyl) und bei 128 bis 136 ppm (Phenyl).

### Beispiel 5

In einem 1 1 Zweihalskolben mit Rückflußkühler und Tropftrichter wurden 0,22 Mol Magnesium (5,3 g), 0,066 Mol Dichlordiphenylsilan (16,7 g; 13,7 ml) und 0,033 Mol Titanocendichlorid (8,2 g) in 150 ml Diethylether vorgelegt. Nach schwachem Erwärmen wurden einige Tropfen Methylenbromid bis zum Anspringen der Reaktion eingebracht. Nach dem Reaktionsstart erfolgte die kontinuierliche Zugabe von 0,1 Mol Methylenbromid (17,4 g; 7 ml) innerhalb von einer Stunde. Anschließend wurde die Reaktionslösung weitere 16 Stunden bei Raumtemperatur gerührt, mit gesättigtem Ammoniumchlorid versetzt, die organische Phase abgetrennt, filteriert und das Lösungsmittel am Rotationsverdampfer destilliert. Das isolierte tiefrote Produkt wurde mehrere Stunden im Hochvakuum bei 100 °C getrocknet.

Die Ausbeute betrug 17,55 g (91 %) Polycarbosilan. Die Elementaranalyse ergab: 11,7 % Si; 70,4 % C; 6 % H; 8,4 % Ti. Das IR-Spektrum zeigte deutlich Cyclopentadienyl- und Ti-C-charakteristische Schwingungsbanden. Die ¹H-NMR- und ¹³C-NMR-Spektren entsprachen weitgehend den Spektren des Heteroelement-Polycarbosilans des Beispiels 4.

### Beispiel 6

In einem 1 1 Zweihalskolben mit Rückflußkühler und Tropftrichter wurden 0,22 Mol Magnesium (5,3 g), 0,066 Mol Dichlordiphenylsilan (16,7 g; 13,7 ml) und 0,033 Mol Zirkonocendichlorid (9,6 g) in 150 ml Diethylether vorgelegt. Nach dem Reaktionsstart wurden innerhalb von einer Stunde kontinuierlich 0,1 Mol Methylenbromid (17,4 g; 7 ml) zugetropft. Die Reaktionslösung wurde 15 Stunden bei Raumtemperatur gerührt und anschließend mit gesättigter Ammoniumchloridlösung versetzt. Nach Abtrennung der organischen Phase wurde diese filtriert und danach das Lösungsmittel abdestilliert. Das isolierte Polycarbosilan wurde 10 Stunden bei 100 °C im Hochvakuum getrocknet.

Die Ausbeute an festem, rotbraunem Polycarbosilan betrug 17,4 g (84 %). Die Elementaranalyse ergab 15 % Si; 65,6 % C; 5,4 % H; 9,4 % Zr. Das IR-Spektrum zeigte deutlich Cyclopentadienyl- und Zr-C-charakteristische Schwingungen. Die ¹H- und ¹³C-NMR-Spektren charakterisierten ebenfalls ein Zr-haltiges Polycarbosilan.

## Patentansprüche

1. Verfahren zur nichtkatalysierten und nichtpyrolytischen Herstellung von Heteroelement enthaltenden Polycarbosilanen auf Basis von Struktureinheiten der allgemeinen Formeln I und II 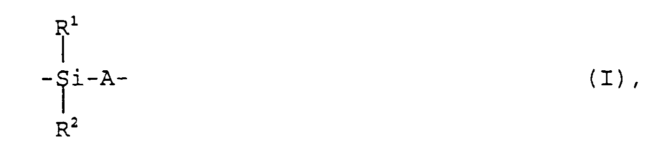 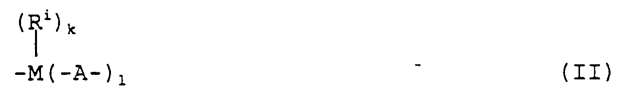 worin
R¹ für Wasserstoff, gegebenenfalls durch inerte Reste substituierte und/oder -verzweigte Alkyl-, Cycloalkyl-, Cycloalkenyl-, Arylalkyl- oder Aryl-Reste steht, wobei R¹ in verschiedenen Einheiten ein und desselben Polycarbosilans auch unterschiedliche Bedeutung besitzen kann,
R² für gegebenenfalls durch inerte Reste substituierte und/oder verzweigte Aikyl-, Cycloalkyl-, Cycloalkenyl-, Arylalkyl- oder Aryl-Reste steht, wobei R² in verschiedenen Einheiten ein und desselben Polycarbosilans auch unterschiedliche Bedeutung besitzen kann,
A für einen geradkettigen oder verzweigten Alkylen-Rest oder einen Arylen-Rest steht, wobei A in verschiedenen Einheiten ein und desselben Polycarbosilans auch unterschiedliche Bedeutung besitzen kann,
M für ein Heteroelement mit einer formalen Wertigkeit m = 2,3,4 oder 5 aus B, Al, Ga, Ge, Sn, Pb, P, As, Sb, Se, Te, Ti, Zr, Hf, V, Nb, Ta, Cr, Mo, W, Mn, Ni, Pd und Pt steht,
(Rⁱ)ₖ für eine Anzahl k = 0,1,2 oder 3 gleicher oder unterschiedlicher Reste Rⁱ aus der Gruppe Alkyl, Phenyl, Cyclopentadienyl und Cyclooctadienyl steht und
1 mit dem Wert 1,. 2, 3 oder 4 für die Anzahl der in der Struktureinheit der Formel II an das Heteroelement M gebundenen Reste A mit der obigen Bedeutung steht, wobei die Maßgabe gilt, daß m = k+l+1 ist, gekennzeichnet, durch Cokondensation wenigstens eines Dihalogensilans der allgemeinen Formel V 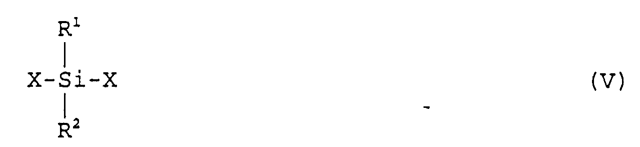
worin
R¹, R² die oben genannte Bedeutung haben und
X für die Halogene Chlor oder Brom steht,
mit wenigstens einem Dihalogenkohlenwasserstoff der allgemeinen Formel VI
Y-A-Y (VI)
worin
A die oben genannte Bedeutung hat und
Y für die Halogene Chlor, Brom oder Jod steht,
und einer Halogenheteroatom-Verbindung der allgemeinen Formel VII 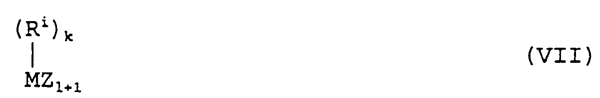 worin
M, (Rⁱ)ₖ und ℓ die oben genannten Bedeutungen haben und
Z für die Halogene Chlor, Brom oder Jod steht,
in Gegenwart von Alkalimetall oder Magnesium, gewünschtenfalls unter Zusatz von Vernetzungs- und/oder Kettenabbruchreagenzien.

2. Verfahren zur Herstellung von Heteroelement enthaltenden Polycarbosilane nach Anspruch 1, dadurch gekennzeichnet, daß eine Halogenheteroatomverbindung der allgemeinen Formel VII, worin (Rⁱ)ₖ für eine Anzahl k = 1, 2 oder 3 gleicher Reste Rⁱ aus der Gruppe C1-C4-Alkyl, Phenyl oder Cyclopentadienyl steht, verwendet wird.

3. Verfahren nach Anspruch 1 und 2, dadurch gekennzeichnet, daß eine Heteroelement-Verbindung aus B mit der Wertigkeit m = 3 und Ti, Zr, Hf mit jeweils der Wertigkeit m = 4, verwendet wird.

4. Verfahren nach Anspruch 1 bis 3, dadurch gekennzeichnet, daß eine Verbindung der allgemeinen Formel VII, in der der Rest Rⁱ im Falle eines Heteroelementes M mit der Wertigkeit m = 3 für Phenyl und im Falle eines Heteroelementes M mit der Wertigkeit m = 4 für Cyclopentadienyl steht, verwendet wird.

5. Verfahren nach Anspruch 1 bis 4, dadurch gekennzeichnet, daß eine Heteroelement-Verbindung der allgemeinen Formel VII, in der 1 für den Wert 1 steht, verwendet wird.

6. Verfahren nach Anspruch 1 bis 5, dadurch gekennzeichnet, daß ein Dihalogenkohlenwasserstoff der allgemeinen Formel VI, in der A für einen C1- bis C6-Alkylenrest steht, verwendet wird.

7. Verfahren nach Anspruch 1 bis 6, dadurch gekennzeichnet, daß ein Dihalogenkohlenwasserstoff der allgemeinen Formel VI, in der A für Methylen, Ethylen, Trimethylen oder Propylen steht, verwendet wird.

8. Verfahren nach Anspruch 1 bis 7, dadurch gekennzeichnet, daß ein Dihalogenkohlenwasserstoff der allgemeinen Formel VI, in der Y für Chlor oder Brom steht, verwendet wird.

9. Verfahren nach Anspruch 1 bis 8, dadurch gekennzeichnet, daß ein Dihalogensilan der allgemeinen Formel V, in der R¹ und/oder R² C1- bis C4-Alkyl, Cyclopentyl, Cyclohexyl, Cyclopentenyl oder Cyclohexenyl, Phenylmethyl, Phenylethyl, Phenyl, Naphthyl, p-Diphenyl, Tolyl, Ethylphenyl oder Propylphenyl, bedeutet, verwendet wird.

10. Verfahren nach Anspruch 1 bis 9, dadurch gekennzeichnet, daß ein Dihalogensilan der allgemeinen Formel V, in der R¹ für Wasserstoff, C1-C4-Alkyl oder Phenyl steht, verwendet wird.

11. Verfahren nach Anspruch 1 bis 10, dadurch gekennzeichnet, daß ein Dihalogensilan der allgemeinen Formel V, in der R² für C1- C4-Alkyl oder Phenyl steht, verwendet wird.

## Claims

1. A method for the non-catalysed and non-pyrolytic preparation of polycarbosilanes, containing a hetero element, on the basis of structural units of the general Formulae I and II, 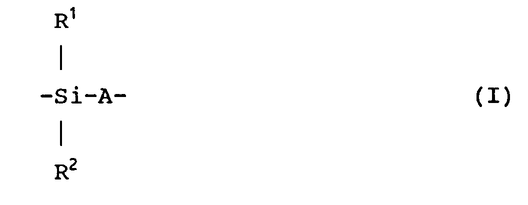 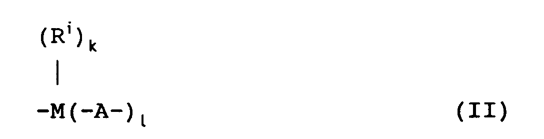 wherein
R¹ stands for hydrogen; alkyl, cycloalkyl, cycloalkenyl, arylalkyl or aryl radicals, optionally substituted and/or branched by inert radicals, whereby R¹ may also have different meanings in different units of one and the same polycarbosilane,
R² stands for alkyl, cycloalkyl, cycloalkenyl, arylalkyl or aryl radicals, optionally substituted and/or branched by inert radicals, whereby R² may also have different meanings in different units of one and the same polycarbosilane,
A stands for a straight-chain or branched alkylene radical or for an arylene radical, whereby A may also have different meanings in different units of one and the same polycarbosilane,
M stands for a hetero element having a formal valence m = 2, 3, 4 or 5, selected from B, Al, Ga, Ge, Sn, Pb, P, As, Sb, Se, Te, Ti, Zr, Hf, V, Nb, Ta, Cr, Mo, W, Mn, Ni, Pd and Pt,
(Rⁱ)ₖ stands for a number k = 0, 1, 2 or 3 of identical or different radicals Rⁱ from the group alkyl, phenyl, cyclopentadienyl and cyclooctadienyl, and
l has the value 1, 2, 3 or 4 and stands for the number of radicals A having the above meaning which are bonded to the hetero element M in the structural unit of Formula II, with the proviso that m = k+l+1,
characterised by co-condensation of at least one dihalosilane of the general Formula V, 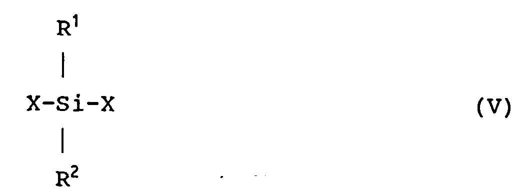 wherein
R¹ and R² have the meanings given above and
X stands for the halogens chlorine or bromine,
with at least one dihalohydrocarbon of the general Formula VI,
Y-A-Y (VI)
wherein
A has the meaning given above and
Y stands for the halogens chlorine, bromine or iodine,
and a halogen heteroatom compound of the general formula VII 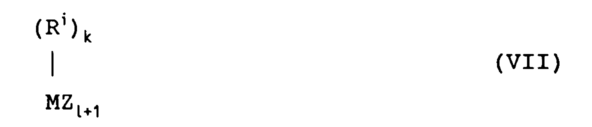 wherein
M, (Rⁱ)ₖ and l have the above meanings and
Z stands for the halogens chlorine, bromine or iodine,
in the presence of alkali metal or magnesium, if desired with the addition of cross-linking and/or chain-breaking reagents.

2. A method for preparing polycarbosilanes containing a hetero element according to Claim 1, characterised in that a halogen heteroatom compound of the general formula VII is used, wherein (Rⁱ)ₖ stands for a number k = 1, 2 or 3 of identical radicals Rⁱ from the group C1-C4-alkyl, phenyl or cyclopentadienyl.

3. A method according to Claims 1 and 2,
characterised in that a hetero element compound from B with the valence m = 3 and Ti, Zr, Hf each with the valence m = 4 are used.

4. A method according to Claims 1 to 3, characterised in that a compound of the general formula VII is used, wherein the radical Rⁱ in the case of a hetero element M with the valence m = 3 stands for phenyl and in the case of a hetero element M with the valence m = 4 stands for cyclopentadienyl.

5. A method according to Claims 1 to 4, characterised in that a hetero element compound of the general formula VII is used, wherein l stands for the value 1.

6. A method according to Claims 1 to 5, characterised in that a dihalohydrocarbon of the general formula VI is used, wherein A stands for a C1- to C6-alkylene radical.

7. A method according to Claims 1 to 6, characterised in that a dihalohydrocarbon of the general formula VI is used, wherein A stands for methylene, ethylene, trimethylene or propylene.

8. A method according to Claims 1 to 7, characterised in that a dihalohydrocarbon of the general formula VI is used, wherein Y stands for chlorine or bromine.

9. A method according to Claims 1 to 8, characterised in that a dihalosilane of the general formula V is used, in which R¹ and/or R² is C1 to C4-alkyl, cyclopentyl, cyclohexyl, cyclopentenyl or cyclohexenyl, phenylmethyl, phenylethyl, phenyl, naphthyl, p-diphenyl, tolyl, ethylphenyl or propylphenyl.

10. A method according to Claims 1 to 9, characterised in that a dihalosilane of the general formula V is used, in which R¹ stands for hydrogen, C1-C4-alkyl or phenyl.

11. A method according to Claims 1 to 10,
characterised in that a dihalosilane of the general formula V is used, in which R² stands for C1-C4-alkyl or phenyl.

## Revendications

1. Procédé de préparation non catalytique et non pyrolytique de polycarbosilanes contenant un hétéroélément à base de motifs de formules générales I et II 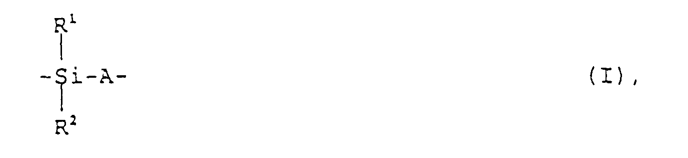 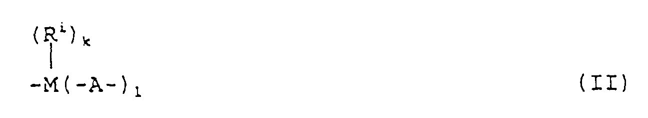 dans lesquelles
R¹ désigne l'hydrogène ou un groupe alkyle, cycloalkyle, cycloalcényle, arylalkyle ou aryle éventuellement substitué par des restes inertes et/ou ramifié, où R¹ peut avoir la même signification ou une signification différente dans les divers motifs d'un seul et même polycarbosilane,
R² désigne un groupe alkyle, cycloalkyle, cycloalcényle, arylalkyle ou aryle éventuellement substitué par des restes inertes et/ou ramifié, où R² peut avoir la même signification ou une signification différente dans les divers motifs d'un seul et même polycarbosilane,
A désigne un groupe alkylène ou arylène à chaîne droite ou ramifiée, où A peut avoir la même signification ou une signification différente dans les divers motifs d'un seul et même polycarbosilane,
M désigne un hétéroélément ayant une valence de m = 2, 3, 4 ou 5 choisi parmi B, Al, Ga, Ge, Sn, Pb, P, As, Sb, Se, Te, Ti, Zr, Hf, V, Nb, Ta, Cr, Mo, W, Mn, Ni, Pd et Pt,
(Rⁱ)ₖ désigne un nombre k valant 0, 1, 2 ou 3 de restes Rⁱ identiques ou différents choisis dans le groupe constitué par un alkyle, le phényle, le cyclopentadiényle et le cyclooctadiényle et
l prend la valeur 1, 2, 3 ou 4 dans le motif de formule II pour l'indice du groupe A fixé à l'hétéroélément M ayant la signification précédente, dans la mesure où m = k + l + 1, caractérisé en ce qu'il comporte une étape qui consiste à co-condenser au moins un dihalogénosilane de formule générale V 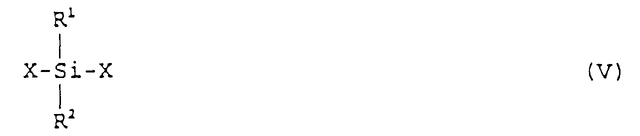
dans laquelle
R¹, R² ont les mêmes significations que ci-dessus et
X désigne un halogène tel que le chlore ou le brome,
avec au moins un hydrocarbure dihalogéné de formule générale VI
Y-A-Y (VI)
dans laquelle
A a la même signification que ci-dessus et
Y désigne un halogène tel que le chlore, le brome ou l'iode,
ainsi qu'un composé à base d'hétéroatome halogéné de formule générale VII 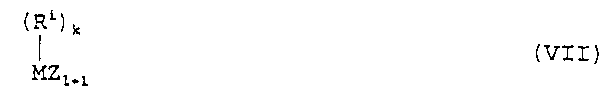 dans laquelle
M, (Rⁱ)ₖ et l ont les mêmes significations que ci-dessus et
Z désigne un halogène tel que le chlore, le brome ou l'iode,
en présence d'un métal alcalin ou de magnésium, et si besoin en ajoutant des réactifs de réticulation et/ou d'interruption de chaîne.

2. Procédé de préparation de polycarbosilanes contenant un hétéroélément selon la revendication 1, caractérisé en ce qu'on utilise un composé à base d'hétéroatome halogéné de formule générale VII, dans laquelle (Rⁱ)ₖ désigne un nombre k valant 1, 2 ou 3 de restes Rⁱ identiques choisis dans le groupe constitué par un alkyle en C1-C4, le phényle, le cyclopentadiényle.

3. Procédé selon la revendication 1 ou 2, caractérisé en ce qu'on utilise un composé à base d'hétéroélément de type B ayant une valence de m = 3 et de type Ti, Zr, Hf ayant chacun la valence de m = 4.

4. Procédé selon l'une des revendications 1 à 3, caractérisé en ce qu'on utilise un composé de formule générale VII, dans laquelle le groupe R¹ désigne phényle dans le cas où l'hétéroélément M a une valence de m = 3 et désigne le cyclopentadiényle dans le cas où l'hétéroélément M a une valence de m = 4.

5. Procédé selon l'une des revendications 1 à 4, caractérisé en ce qu'on utilise un composé à base d'hétéroélément de formule générale VII, dans laquelle l a pour valeur 1.

6. Procédé selon l'une des revendications 1 à 5, caractérisé en ce qu'on utilise un hydrocarbure dihalogéné de formule générale VI, dans laquelle A désigne un groupe alkylène en C1-C6.

7. Procédé selon l'une des revendications 1 à 6, caractérisé en ce qu'on utilise un hydrocarbure dihalogéné de formule générale VI, dans laquelle A désigne le méthylène, l'éthylène, le triméthylène ou le propylène.

8. Procédé selon l'une des revendications 1 à 7, caractérisé en ce qu'on utilise un un hydrocarbure dihalogéné de formule générale VI, dans laquelle Y désigne le chlore ou le brome.

9. Procédé selon l'une des revendications 1 à 8, caractérisé en ce qu'on utilise un dihalogénosilane de formule générale V, dans laquelle R¹ et / ou R² désigne un alkyle en C1-C4, le cyclopentyle, le cyclohexyle, le cyclopentényle ou le cyclohexenyle, le phénylméthyle, le phényléthyle, le phényle, le naphtyle, le p-diphényle, le tolyle, l'éthylphényle ou le propylphényle.

10. Procédé selon l'une des revendications 1 à 9, caractérisé en ce qu'on utilise un dihalogénosilane de formule générale V, dans laquelle R¹ désigne l'hydrogène, un alkyle en C1-C4 ou le phényle.

11. Procédé selon l'une des revendications 1 à 10, caractérisé en ce qu'on utilise un dihalogénosilane de formule générale V, dans laquelle R² désigne un alkyle en C1-C4 ou le phényle.
